(19) Europäisches Patentamt
European Patent Office
Office européen des brevets

(11) EP 0 962 700 A2

(12) # EUROPEAN PATENT APPLICATION

(43) Date of publication:
08.12.1999 Bulletin 1999/49

(51) Int Cl.6: F23J 7/00, C10L 10/00, B01D 53/70

(21) Application number: 99303530.2

(22) Date of filing: 05.05.1999

(84) Designated Contracting States:
AT BE CH CY DE DK ES FI FR GB GR IE IT LI LU MC NL PT SE
Designated Extension States:
AL LT LV MK RO SI

(30) Priority: 06.05.1998 JP 12369798

(71) Applicants:
- Maeda, Nobushige
Tokyo 177-0042 (JP)
- Mochigase Electric Technical Co., Ltd.
Yazu-gun, Tottori-ken 689-1201 (JP)

(72) Inventor: Maeda, Nobushige
Tokyo 177-0042 (JP)

(74) Representative: Rees, David Christopher et al
Kilburn & Strode
20 Red Lion Street
London WC1R 4PJ (GB)

(54) **Dioxin depressant and method for use thereof**

(57) A technique is provided which is capable of repressing the occurrence of dioxins by a simple procedure using a reagent formed of raw materials which can be procured cheaply and stably in large amounts. The technique comprises a dioxin depressant capable of repressing the occurrence of dioxins during the incineration of waste, characterized by containing at least one member selected from the group consisting of calcined dolomite having magnesium oxide and calcium carbonate as main components thereof, preferably additionally containing calcined dolomite having magnesium oxide and calcium oxide as main components thereof, and a method for the use of the dioxin depressant characterized by performing an incinerating or heating treatment on the waste in the presence of the dioxin depressant.

EP 0 962 700 A2

## Description

This invention relates to a novel dioxin depressant capable of depressing dioxins which occur during the incineration of waste and a method for the use of the depressant. The invention more particularly relates to a dioxin depressant capable of very efficiently and effectively depressing harmful dioxins which are generated from organic chlorine compounds contained in ordinary refuses such as urban garbage, factory waste materials such as waste oil, waste plastic, and sludge, and industrial waste material such as agricultural and constructional refuses arising from agricultural vinyl chloride resin material, wall papers, building materials, and soft leather when these waste materials containing the organic chlorine compounds are incinerated and to a method for the use of the dioxin depressant.

The "dioxin" drawing public attention as a substance for environmental pollution means polychlorinated dibenzoparadioxins (PCDDs) which come in 75 species of homologs (inclusive of isomers), depending on the number and the cite of substituting chlorine molecules thereof. The polychlorinated dibenzofurans (PCDFs) generally formed simultaneously with the PCDDs and possessed of similar chemical constitution and quality are a group of compounds which come in 135 species of homologs. Though various chlorine compounds have been recently forming the subject of discussion as dioxin-related substances, their evaluations are not necessarily definite. Morever, the dioxin-related substances which are detected in the environment are generally complicated mixtures of homologs. This specification, therefore, elects to handle both PCDDs and PCDFs (inclusive of homologs), i.e. the environment-polluting substances, collectively as dioxins. These compounds exhibit extreme stability in the environment and, more often than not, exert severe toxicity on organisms. They are a group of substances which have absolutely no availability for mankind and have never been commercially produced. These dioxins are possibly by-produced as impurities, though in minute amounts, during the production of various chemical substances such as, for example, antiseptics represented by chlorinated phenols, suffered to mingle into finished products and find way to the market or they are possibly released directly as effluents from plants into the environment.

In the case of the land-fill disposal of industrial waste, the possibility exists that dioxins as impurities will leak into the water flooding the site of disposal and eventually pollutes the ground water. One particularly important source for dioxins is such a thermochemical reaction as occurs in the incineration of urban garbage which accounts for the greater part of the amount of dioxins to be generated at all. Specifically, the amount of organic chlorine compounds to be used has been globally increasing with the growth of the modern chemical industry. When these substances are to be discarded by reason of aging, for example, they are scrapped as ordinary waste like urban garbage or subjected to segregated disposal as industrial waste. The fact that these substances give rise to dioxins during the course of their incineration has come to raise a problem. Particularly in Japan, nearly all the ordinary waste is now disposed of by incineration (according to the 1994 survey, for example, the number of urban garbage incineration furnaces in Japan is close to about 2,000 and the amount of waste to be incinerated per year is 37,000,000 tons, a fairly large volume as compared with the volumes recorded in other countries, and this amount is tending to increase year after year) because the territory of Japan is narrow and also because the sites available in Japan for land-fill disposal are few. A report has it that 78 - 88% of the whole amount of dioxins generated originates in the incineration of urban solid waste.

The practice of disposing of spent oil, plastic waste, and sludge by incineration has also disseminated. The disposal of waste by incineration, inclusive of this practice, constitutes itself the most important source for dioxins. Besides, the waste arising from the medical practice is ordinarily incinerated by a small-scale incinerating device installed within the relevant medical premises. This particular incineration, however, does not deserve to be rated as being managed fully satisfactorily. It is held that the amount of dioxins formed by this incineration is on a par with that of dioxins emanating from the disposal of urban solid waste. In the incineration of a various sort of sludge mentioned above, particularly the incineration of the sludge from sewage and that of the sludge from papermaking are responsible prominently for the formation of dioxins. The timbers which have been treated with pentachlorophenol (PC) prior to shipment also emit dioxins while they are in actual use or when they are incinerated.

Various studies made in an effort to elucidate the mechanism of the formation of dioxins by the thermochemical reactions such as the incineration of urban garbage have been reported in literature. At present, the theory that the dioxins are formed when such compounds of small molecular weights as phenol chloride and benzene chloride which result from the decomposition of organic substances are condensed at high temperatures and that they are synthesized from a carbon skeleton and chlorine atoms (de novo synthesis) by the catalytic action occurring on the surface of the ash formed by the incineration as summarized in "Type diagram of the mechanism of the formation of dioxins from organic substances as by the incineration of waste" depicted by the use of the following formulas of chemical constitution is finding general approval.

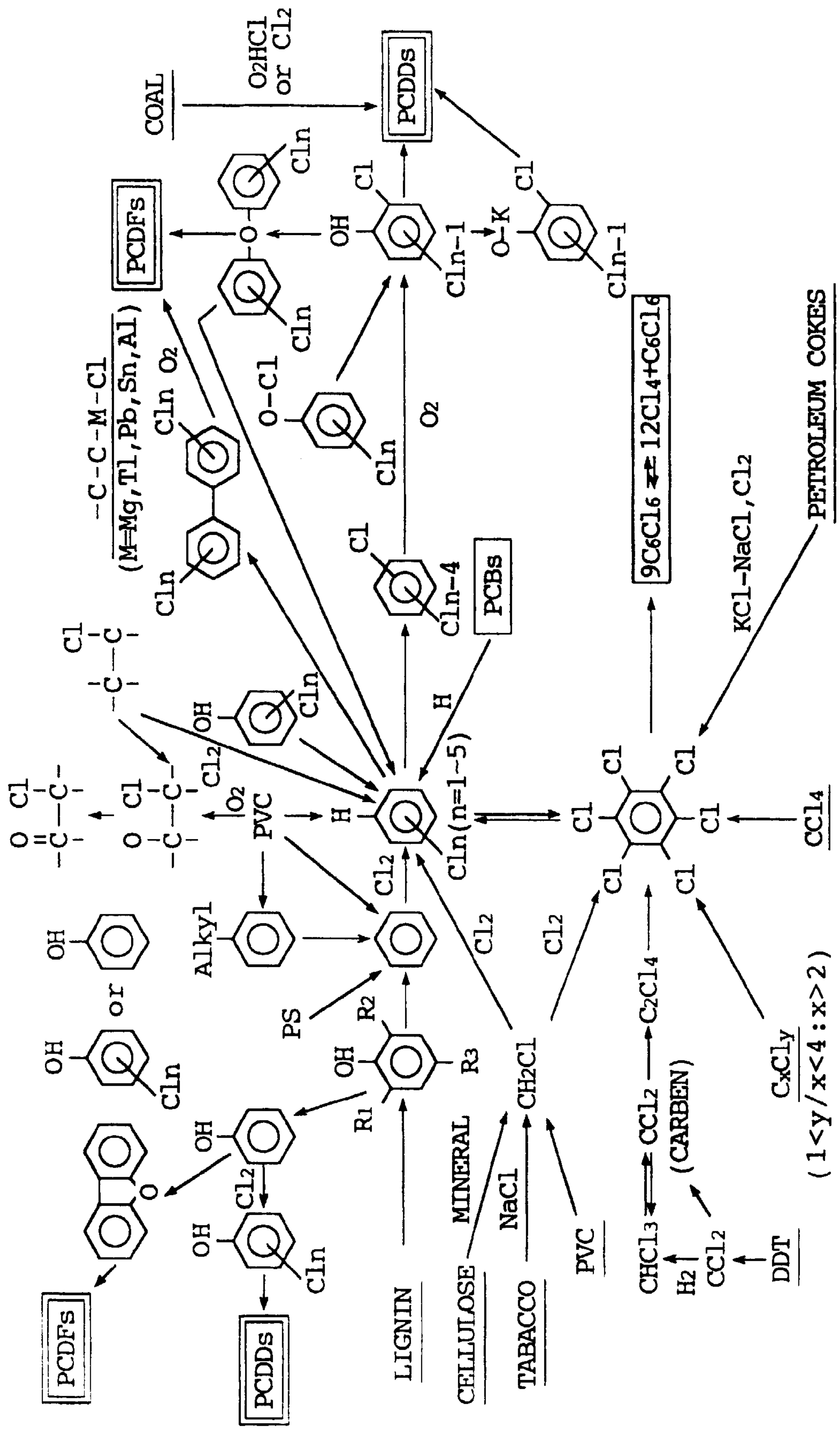


PS:POLYSTYRENE

The first step toward restraining such discharge of dioxins during the incineration of waste as mentioned above comprises decreasing the amount of the waste subjected to the incineration. On the basis of the viewpoint that for the sake of restraining the discharge of dioxins from the waste incineration facilities, it is important to repress to the fullest possible extent the formation of dioxins in the furnaces (boilers) by managing combustion thereby ensuring perfect combustion and cope with the formation of dioxins by designing a waste gas treating system through the combination of various technologies, the development of relevant technologies has been advancing.

In order to accomplish the perfect combustion among other measures mentioned above, the requirement that the combustion gas be used at a high temperature, allowed an ample retention time, and given a thorough stir within the furnace and enable to be mixed therein with secondary air must be fulfilled. Thus, the automatic combustion control which combines the technology for the furnace operation intended for the requirement with a fuzzy control has been developed and already put to practical use. This control, however, is at a disadvantage in entailing an undue increase in the running cost and the cost for maintenance and management because the combustion gas must be retained at a high temperature and requiring the inner wall of the incineration furnace to use a refractory material excelling in resistance to high temperature because the inner wall succumbs to accelerated deterioration. Further, the automatic combustion control which combines the technology for the furnace operation with the fuzzy control has the problem that it finds no easy satisfaction in either the existing combustion furnace having no use for the control under discussion or the small-scale combustion facility and requires either of them to be modified at a high cost. The provision of nearly 2,000 urban garbage incineration furnaces or facilities with this control system is substantially infeasible.

In the waste gas disposal system, efforts are directed at lowering the temperature of the treatment, improving the efficiency of dust removal, and making effective use of the action of adsorption. Such techniques as are adapted to lower the temperature of a bag filter, remove active carbon dust with a spray column or an active carbon type adsorption column, decompose dioxins with a catalyst (a titanium-vanadium-containing catalyst or a precious metal-containing catalyst), and repress the occurrence of dioxins with a chemical depressant (triethanolamine, aqueous hydrogen peroxide solution, etc.) have been already developed. The method which relies on the lowering of the temperature of the bag filter and the method for removing the active carbon dust with the spray column or the active carbon type adsorption column are not capable of repressing the formation of dioxins. The active carbon is not capable of selectively adsorbing dioxins. Since it adsorbs not only the dioxins but also the other components of the waste gas, it offers only a short service life and requires frequent replacement with a new supply. Then, the disposal of the active carbon which has adsorbed the recovered dioxins inevitably increases the number of steps which precede the final stage of disposal and boosts the cost thereof because it necessitates installation of a special device for decomposing the dioxins and converting them into harmless compounds. The method for decomposing the dioxins with a catalyst (a titanium-vanadium-containing catalyst or a precious metal-containing catalyst) is not capable of repressing the formation of dioxins. It has been reported that when a cloth of active carbon fibers having particles of gold (precious metal) and iron oxide, several angstroms in diameter, uniformly dispersed (deposited) thereon is used as a waste gas filter, it can decompose dioxins. Owing to the use of the catalyst of a precious metal such as gold, this filter inevitably proves highly expensive and entails the problem that it finds no easy satisfaction in either the existing combustion furnace or the small-scale combustion facility and requires either of them to be modified at a high cost. The provision of nearly 2,000 urban garbage incineration furnaces or facilities with this filter is difficult to fulfill from the practical point of view. It is suspected that the reduction of the concept of this filter to practice will need still more time because the filter is confronted with unsolved problems such as, for example, the durability which remains yet to be ascertained. Further, the technique for repressing the occurrence of dioxins with a chemical depressant (triethanolamine, aqueous hydrogen peroxide solution, etc.) barely attains, though not thoroughly, the purpose of repressing the formation of dioxins. The chemical depressants such as triethanolamine and aqueous hydrogen peroxide solution are comparative expensive. Since they must be handled and stored with due attention, any person assigned to handle them is required to own ample knowledge of these chemical substances. The furnishment of roughly 2,000 incineration facilities including urban garbage incineration furnaces and other small-scale incineration units with such devices and experts as mentioned above is difficult to fulfill from the practical point of view. Further, the supply of chemical depressants in amounts enough to dispose of 37,000,000 tons of waste fated to be incinerated annually within the territory of Japan is difficult to fulfill from the practical point of view.

The dolomite (compound carbonate of calcium and magnesium, $CaMg(CO_3)_2$, or rock having this compound carbonate as a main component) is generally used in agriculture as a soil conditioner (magno-lime fertilizer) after undergoing a step of pulverization subsequent to the work of mining. It is otherwise converted by calcination into dolomite plaster or used as a raw material for sheet glass or as a dolomite clinker for lining a steelmaking furnace or stamping a hearth. The dolomite is in such a state as mentioned above. Incidentally, the dolomite ore and the calcined dolomite are inexpensively yielded and processed home and abroad. They may well be regarded as fully suppliable.

An object of this invention, therefore, is to provide a technique capable of repressing the occurrence of dioxins by an easy method using a material which can be procured inexpensively and stably in a large amount.

After pursuing a diligent study in search of a technique capable of repressing the occurrence of dioxins for

the purpose of accomplishing the object mentioned above, it has been discovered that part of dolomite and calcined dolomite are useful for repressing the occurrence of dioxins. This invention has been perfected based on this knowledge.

Specifically, an object of this invention can be fulfilled by a dioxin depressant capable of repressing the occurrence of dioxins in consequence of the incineration or heat-treatment of waste, which is characterized by containing at least one member selected from the group consisting of calcined dolomite and dolomite.

Another object of this invention can be further fulfilled by a method for the use of a dioxin depressant, characterized by incinerating or heat-treating waste in the presence of the above-mentioned dioxin depressant.

In the drawings:-

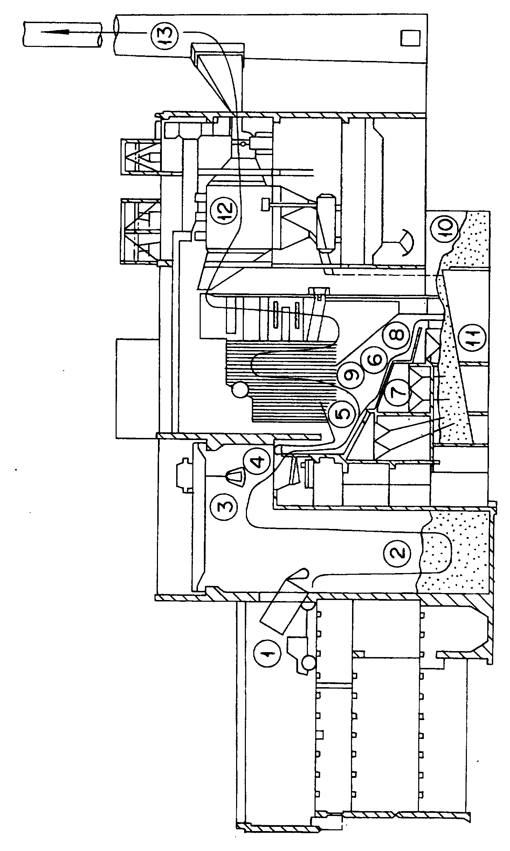

Fig. 1 is a schematic diagram of a water wall type combustion furnace which is one version of the translation lattice incineration furnace representing the latest urban garbage incineration furnaces adapted to recover heat in the form of steam. The combustion furnace is constructed of three main parts. In this furnace, inlet parts (denoted by circled numerals, 1 - 4) feed the raw material to combustion parts (denoted by circled numerals, 5 - 9) and treating parts (denoted by circled numerals, 10 - 13) treat the matter discharged from an incineration furnace partly in a solid state and partly in a gaseous state. A meandering arrow mark (or solid line) in the diagram depicts the flow of the waste advanced from the inlet parts to the combustion parts and brought thence to the treating parts as divided into a solid part and a gaseous part of waste.

The dioxin depressant of this invention is a reagent which is capable of repressing the dioxins generated in consequence of the incineration or heat-treatment of waste. It is characterized by containing at least one member selected from the group consisting of calcined dolomite and dolomite. The term "dolomite" as used herein refers to the compound carbonate $CaMg(CO_3)_2$ of calcium and magnesium, otherwise called dolomite or dolostone or to the rock having the compound carbonate as a main component thereof. The dolomite has a character such that when it is heated, the $MgCO_3$ moiety thereof is decomposed with liberation of $CO_2$ and converted into the product of calcination of calcium carbonate ($CaCO_3$) and magnesium oxide (MgO) (hereinafter referred occasionally to simply as "calcined dolomite A") at 700° - 800°C and the $CaCO_3$ moiety thereof is decomposed with liberation of $CO_2$ and converted into the product of calcination of calcium oxide (CaO) and magnesium oxide (MgO) (hereinafter referred occasionally to simply as "calcined dolomite B"). As the calcined dolomite which can be used in the preent invention, it is specifically limited, and any of calcined dolomite obtained by clacinating calcined dolomite at a temperature of less than 700°C, calcined dolomite obtained by calcinating at a temperature of 700° to 800°C (calcined dolomite A), and calcined dolomite obtained by calcinating at a temperature of not less than 900°C (calcined dolomite B) may be used. However, if it is clacined at extremelyu higher temperature, dolomite will be molten, so clacined dolomite which is calcined at a temperature of 900° to 1,200°C, expecially 1,000° to 1,100°C is preferable. Further, if dolomite is calcined at a temperature of less than 700°C, $MgCO_3$ and $CaCO_3$ in dolomite are not decomposed, so it acts as the same as dolomite. Then the calcined dolomite B obtained by calcination at a temperature of 900° to 1,200°C, especially 1,000° to 1,100°C is preferable among dolomite and calcined dolomite, because it is relatively higher in depression effect compared to dolomite and other calcined dolomite.

First, the dolomite as the essential component of the dioxin depressant of this invention and the calcined dolomite may be selectively used. Otherwise, they may be simultaneously used. In the case of the simultaneous use, the compounding ratio of the two members does not need to be restricted particularly but may be arbitrarily selected.

The particle size of either the dolomite or the calcined dolomite does not need to impose any restriction particularly but may be properly selected to suit the purpose for which the dioxin depressant is to be used. It may be safely concluded that when the dioxin depressant is produced wholly in a substantially equal particle size, it will prove convenient and preferable as for the sake of handling. In the case of applying either of the species of dolomite to the incineration furnace for the standard waste, for example, when the dioxin depressant is added directly to the incineration furnace, this dolomite is preferred to have a prescribed particle size. Specifically, the dolomite crushed into particles of diameters in the approximate range of 5 - 30 mm is used properly. The reason for this particular range is as follows: If the dolomite is crushed into particles of a smaller diameter, the particles will be blown up by the phenomenon of convection inside the combustion furnace and possibly collected by the dust collector in the furnace before they are enabled to manifest thoroughly the effect thereof or suffered to clog the waste gas filter. Conversely, if the dolomite is crushed into particles of a larger diameter, the particles will be incapable of being quickly pulverized and dispersed (diffused) during the course of incineration. As respect the term "pulverization" mentioned herein, since the dolomite and the calcined dolomite have a quality of swelling and easily disintegrating into particles on absorbing water, they are caused to succumb to the pulverization by the water contained in the waste or the water added during the course of incineration. Generally, from the viewpoint of conferring exalted efficiency on the dioxin depressant, the particles are preferred to have a smaller diameter specifically in the approximate range of 30 - 50 μm. Since the pulverization enables the particles to be uniformly dispersed and vested with an increased surface area, the particles can acquire an increased contact area (frequency of contact) with compounds of small molecular weights such as phenol chloride and benzene chloride which are generated in the furnace during the process of incineration, compounds having carbon

skeletons, chlorine-containing compounds, and chlorine type gases. On account of the merit of the pulverization, therefore, the practice of causing the dioxin depressant which contains the dolomite and the calcined dolomite both in a powdered state to be preparatorily mixed with the waste or to be added simultaneously with water to the waste may be considered preferable.

With respect to the mechanism of the action (reaction or catalysis) of the dioxin depressant of this invention, namely the mechanism for the repression of the occurrence of dioxins, since the characteristic properties owned by dolomite are varied by firing (the characteristic properties of the dolomite and the calcined dolomite are conspicuously different as clearly noted from the numerical values of surface area, pH, emissivity, antibacterial ratio, deodorization ratio, activity, crack-per-pass, and relative dielectric constant shown in Table 1 below), the question how these properties bear on the repression of the occurrence of dioxins remains yet to be elucidated. Since the generation of harmful dioxins was not recognized and the emission of a chlorine component (chlorine type gas) indispensable for the synthesis of dioxins was not recognized in the working examples which will be more specifically described herein below, the present inventor infers that the dioxin depressant possesses the mechanism (reaction or catalysis) of acting at least on the chlorine component and that the carbonate group in the composition of the dolomite or the calcined dolomite bears in some form or other on the mechanism. This statement does not depart from the realm of inference. As demonstrated in Example 4 and Control 4 which will be cited herein below, when the industrial waste containing calcium carbonate in a fairly large amount from the beginning separately of the dioxin depressant of this invention is merely subjected to a treatment of incineration in the conventional manner, the emission of dioxins and chlorine component cannot be repressed, whereas this treatment of incineration, when performed on the same industrial waste in the presence of the dioxin depressant of this invention, results in repressing the occurrence (discharge) of dioxins and the chlorine component. Since these results imply that the mere presence of calcium carbonate fails to bring the effect peculiar to the present invention, it is suspected that the mechanism of the dioxin depressant possibly has a complicated and compounded nature. It may be safely concluded, therefore, that the precise elucidation of the mechanism of operation (reaction or catalysis) of the dioxin depressant of this invention ought to await the outcomes of an elaborate future study.

Table 1

| | | Surface area ($m^2/g$) | pH | Emissivity (%) | Antibacterial ratio (%) | Deodorization ratio (%) | Activity (%) | Crack-per-pass (%) | Relative dielectric constant (Ke) |
|---|---|---|---|---|---|---|---|---|---|
| Dolomite | | 5.0 | 9.0 | 89.5 | 65.0 | 50.0 | 52.0 | 99.7 | 5.7 |
| Calcined dolomite | A (750°C) | 8.5 | 8.7 | 93.0 | 92.0 | 94.0 | 90.0 | 93.0 | 8.4 |
| | B (950°C) | 8.7 | 8.6 | 94.0 | 99.8 | 98.0 | 93.0 | 65.0 | 8.6 |

Then, the calcined dolomite B possesses better antibacterial and deodorizing properties than the dolomite or the calcined dolomite as shown in Table 1 above in addition to the ability to repress the occurrence of dioxins. When the ash remaining after incineration is to be disposed of, therefore, it cannot give rise to the problem of public nuisance due to the emission of offensive odor because the calcined dolomite B manifests the antibacterial and deodorizing effects. When the ash is recovered for the purpose of recycling (as when the ash is manufactured by firing into tiles for paving a sidewalk, for example), the calcined dolomite B is capable of imparting outstanding antibacterial and deodorizing properties to the products of recycling.

The calcined dolomite B is not particularly discriminated. The calcined dolomite B of a required particle size can be obtained by surfacing the dolomite ore from a mine, pulverizing the ore into particles of a prescribed size (not more than 50 microns), firing the particles at a temperature in the range of 900° - 950°C in a furnace, and thereafter screening the fired particles.

The method for production of dolomite and that for production of calcined dolomite do not need to be discriminated particularly. The dolomite of a required particle size can be obtained by surfacing the dolomite ore from a mine, pulverizing the ore, and screening the resultant powder. The calcined dolomite A of a required particle size can be obtained by surfacing the dolomite ore from a mine, pulverizing the ore into particles of a prescribed size (not more than 50 microns), firing the pulverized dolomite in a furnace at a temperature in the range of 700° - 800°C, and thereafter screening the resultant powder.

The dioxin depressant of this invention may additionally incorporate therein as noncompulsory components such activators as zinc and titanium. The amounts of these additives are only required to be such that the additives may manifest their expected effects.

As typical examples of the waste to which the dioxin depressant of this invention can be effectively applied, ordinary waste such as urban garbage, soft leather scraps, wall paper scraps, scraps of building materials and timbers containing such organic chlorine compounds as PCP, agricultural scraps of hard or soft vinyl chloride resin, solid scraps such as polluted soil and exhausted plastic materials containing such organic chlorine compounds as polychloride biphenyl (PCB), waste oil containing such organic chlorine compounds as PCB, liquid industrial waste materials such as sewage sludge and paper plant sludge, and industrial waste materials including scraps from medical facilities which invariably contain organic chlorine compounds fated to emit dioxins may be cited. The organic chlorine compounds such as, for example, polyvinyl chloride are used in the articles enumerated in Table 2 below and, therefore, are fated to mingle eventually into urban garbage or to be recovered intentionally as industrial waste.

Table 2

| Classification of uses | | Items |
|---|---|---|
| [Hard articles] | Flat plates | Industrial products (ducts, tanks, flanges, earthquake-proof tools), haberdasheries (articles for refrigeration, articles of stationery, articles for rolling stock, toys, displays, signboards), building materials, and agriculture |
| | Films and sheets | Non-food packages (blister packs, cases, light-weight containers), food packages (egg packs, soybean cake packs, fruit packs, cups, caps, partition trays), and other articles (industrial cooling towers, articles of stationery, toys and ornaments, agriculturals, and building materials) |
| | Corrugated plates | Building materials (terraces, sky lights, car ports, shades, barracks, enclosures, junk rooms, arcades) and agricultural articles (furrow boards) |
| | Pipes | Agricultural articles (water ducts, irrigation ducts, inundating water ducts, pesticide spray cloths), mining and manufacturing articles (plant piping and ventilators and waste water ducts in mines), articles for city water system (service water pipes and simplified water ways), electric wire ducts (indoor distributions and road illuminations), articles for telephone and telegraph services (pipes for telecommunication cables), building materials, articles for civil engineering (roads, railroads, golf grounds, sewerages, land development, water supply and waste water discharge in buildings, ventilation), and other articles (articles for fishery and pipes for hot water supply and waste water discharge) |

Table 2 (continued 1)

| Classification of uses | | | Items |
|---|---|---|---|
| [Hard articles] | Joints | | Joints for water supply pipes and waste water discharge pipes, valves, and flanges |
| | | | |
| | Others | Articles of profile extrusion | Building materials (ribs, panels, shades, rattan blinds, screen doors, window frames, deck materials, angles, and facing materials), household sundry goods (pen holders, slatted drainboards, bathtubs, rails), low current products (refrigerator frames and lighting devices), telephone materials (wiring ducts and wire protectors), and furniture and woodworks (edge pieces and hems) |
| | | Hollow shaped articles | Food bottles (for holding soy source, source, and vinegar) and non-food bottles (for holding cosmetic articles and shampoos) |
| | | Others | blind, disk records, telephone sets, and other hard products such as daily sundry goods and parts for electrical and mechanical tools |

Table 2 (continued 2)

| Classification of uses | | | Items |
|---|---|---|---|
| [Soft articles] | Films and sheets | Ordinary articles | Sundry goods (sundry goods, ornaments for furniture, articles of stationery, toys filled with air), packages (for foodstuffs and textiles), articles for rolling stock (sheets for automobiles), and covering materials (for timbers, metal products, paper products, and laminates) |
| | | Articles for agriculture | Farm tools, tools for handling vegetables, tools for handling paddy rice, and tools for handling tobacco plants |
| | Leather | | Products obtained by coating such substrates as cloth and paper with vinyl layers (inclusive of sponge leather), and leather products for rolling stock, furniture, building materials, briefcases and pouches, and articles of stationery |
| | Ordinary extruded articles | | Hose and tubes, gaskets, waterstop boards, and parts for mechanical implements |
| | Others | | Dolls, shoe soles, boots, gloves, tapes, sail cloth, and soft products other than those mentioned above |
| [Electric cables and others] | Electric cables | | Sheaths for electric cables (for telecommunication wires, cords, cables, and wiring) |
| | Flooring materials | | Articles for floors (tiles, flooring, and other flooring materials) |
| | Textile articles | | Clothes, fishing nets, fishing ropes, insect screens, fibers (flocculents), brushes, and others |
| | Others | | Coating materials (to be used as solved with a solvent) and soft and hard foamed products (floats, heat insulators, and cushioning materials) |

The method for using the dioxin depressant according to this invention is characterized by performing the treatment for incinerating or heating a given waste in the presence of the dioxin depressant described above. Specifically, the method of this invention for using the dioxin depressant only requires the dioxin depressant to be present at the site of the treatment of incinerating or heating a given waste in such a manner as to repress the occurrence of dioxins due to the thermochemical reaction induced during the course of incineration. For this purpose, the dioxin depressant may be added all at once to the waste in advance of the incinerating or heating treatment or the dioxin depressant may be suitably added piecemeal at a proper rate while the waste is undergoing the incinerating or heating treatment. Optionally, the addition of the dioxin depressant may be effected by combining these two modes of procedure. The use of the expression "incinerating or heating treatment" herein is justified in the light of the present inventor's new discovery that when the liquid waste such as waste oil containing such organic chlorine compounds as PCB, among other types of waste containing organic chlorine compounds which have been heretofore disposed by incineration, is subjected to a low-temperature heat treatment in the presence of the dioxin depressant of this invention besides being incinerated in a furnace proper for the waste, the organic chlorine compound such as PCB can be converted by decomposition into a harmless substance. The heat treatment to be performed at a low temperature (in the approximate range of 50° - 60°C) is specifically capable of decomposing and expelling the chlorine component which is indispensable for the synthesis of harmful dioxins. The oil disposed of by the low-temperature heat treatment, when obtained in a reclaimable form, may be recycled through a refining treatment. When this oil happens to be not reclaimable, it may be disposed of by incineration without adopting any special measure adapted to repress dioxins. Since this oil possibly entrains as a residue such an organic chlorine compound as PCB, though in a very minute amount, the repetition of the application of the method of this invention to the incinerating treatment proves a highly preferable mode of embodiment of this invention.

The amount of the dioxin depressant which is necessary for repressing the occurrence of dioxins cannot be precisely defined because the mechanism of the repression of the occurrence of dioxins has not yet been thoroughly elucidated. Since the dioxin depressant, as clearly noted from the results of experiment described in the working examples to be cited herein below, possesses an ability to decompose and expel the chlorine component indispensable for the synthesis of dioxins, the necessary amount of the dioxin depressant can be calculated based on the theoretical formula shown below. The calculation that follows is based on the assumption that the chlorine component (hydrogen chloride) emitted from the organic chlorine compound in the waste (the vinyl chloride resin which accounts for a large proportion of the chlorine content in the molecule is considered for the calculation) is decomposed (neutralized) by the dioxin depressant into water, carbon dioxide, and chloride.

1. One mol (62 g) of vinyl chloride, when thermally decomposed, emits one mol (36 g) of HCl. This means that 100 g of vinyl chloride emits 58 g of HCl.

$$CH_2CHCl \rightarrow (C_2H_2) + HCl$$

2. One mol of $CaCO_3$ or $MgCO_3$ neutralizes two mols of HCl.

$$2HCl + CaCO_3 \rightarrow CaCl_2 + H_2O + CO_2$$

$$2HCl + MgCO_3 \rightarrow MgCl_2 + H_2O + CL_2$$

3. The ratio of the amounts of CaO and MgO present in the calcined dolomite B is as follows.

$$CaO/MgO = 66/34 \text{ (ratio by weight)}$$
$$= 1.18 / 0.85 \text{ (molar ratio)}$$

The molar ratio mentioned above is calculated from the molecular weights of CaO and MgO. It is assumed that this ratio constitutes itself the molar ratio of $CaCO_3$ and $MgCO_3$ in the dolomite.

4. On the assumption given in 3 above, 12.36 mols of HCl is treated with 1.18 mols of $CaCO_3$. By the same token, 11.7 mols of HCl is treated with 0.85 mol of $MgCO_3$.

5. When 58 g (1.61 mols) of hydrogen chloride emitted from 100 g of vinyl chloride is treated by itself, the treatment requires either of $CaCO_3$ and $MgCO_3$ to be used equally in an amount of 0.805 mol. When these carbonates are

apportioned by the ratio of presence, 1.18/0.85, shown in 3 above, the ratio is found to be 0.47/0.34. The weights of the carbonates are found by multiplying the numerator and the denominator of the ratio respectively by the molecular weight, 100, of $CaCO_3$, and the molecular weight, 84, of $MgCO_3$ as shown below.

$$CaCO_3\text{: } 0.47 \times 100 \text{ g} = 47 \text{ g}$$

$$MgCO_3\text{: } 0.34 \times 84 \text{ G} = 29 \text{ g}$$

Total: 76 g

The treatment of 100 g of vinyl chloride resin, therefore, requires 76 g of dolomite.

The ordinary waste such as urban garbage generally contains an average of about 5 tons of organic chloride compound per 100 tons. When this waste is to be incinerated, therefore, the amount of the dioxin depressant which is required in repressing the occurrence of dioxins and converting the dioxins into a harmless substance is roughly 3.8 tons. This amount is true where the dioxin depressant is formed wholly of dolomite. When the dioxin depressant contains the calcined dolomite A and B and other components, it suffices to decide the total amount of the dioxin depressant to be required by performing the same calculation as described above. In this case, since the required amount varies with the ratio of the amount of the chlorine compound to the amount of the dioxin depressant and the kind of the chlorine compound and also since the theoretical calculation mentioned above considers solely the function of removing the chlorine component and pays absolutely no consideration to the other function of repressing the occurrence of dioxins, the practice of performing a small-scale preliminary experiment based on the required amount derived from the theoretical calculation and subsequently deciding the required amount on the basis of the experiment may prove preferable.

The manner of supplying (using) the dioxin depressant is a matter to be suitable selected depending on the purpose for which the dioxin depressant is used. It suffices to adopt the optimum method of using, depending on the type of incinerator to be used. Fig. 1 is a schematic diagram illustrating a water wall type incineration furnace which is one version of the translation lattice incineration furnace representing the latest urban garbage incineration furnaces adapted to recover heat in the form of steam. The combustion furnace shown in Fig. 1 is constructed of three main parts, i.e. inlet parts (denoted by circled numerals, 1 - 4) serving to feed the raw material to combustion parts (denoted by circled numerals, 5 - 9) and treating parts (denoted by circled numerals, 10 - 13) serving to treat the matter discharged from an incineration furnace partly in a solid state and partly in a gaseous state. A meandering arrow mark (or solid line) in the diagram depicts the flow of the waste advanced from the inlet parts to the combustion parts and brought thence to the treating parts as divided into a solid part and a gaseous part of waste. In this lattice furnace, the waste supplied to the furnace is generally dried first and then preheated with the combustion gas of a high temperature and the radiation heat emanating from the upper side face of the refractory. When the waste is further heated until thermal decomposition and ignition, the gas generated by the thermal decomposition and the residual solid are simultaneously combusted. The air jet accelerates and promotes the mixing and combusting actions proceeding inside the empty space filled with the over-fired air. The lattice is intended to support the waste, feed the underfiring air upward through the opening, transfer the ash of the waste through the raw material shute to the cooler, and at the same time stir the layer of the waste for the purpose of transferring the incoming waste to the surface of the lattice. In the case of the water wall type incineration furnace which is one version of the translation lattice incineration furnace representing the latest urban garbage incineration furnaces adapted to recover heat in the form of steam as illustrated in Fig. 1, therefore, when the waste is dropped through the inlet mouth of an open storage space (circled numeral 1) into a waste shute (circled numeral 2), the dioxin depressant may be supplied in an amount enough to give thorough treatment to the waste from the storage part annexed (externally or internally) to the incineration furnace in such a manner as to be uniformly mixed with the waste, the dioxin depressant from the storage part may be supplied to the interior of a shaking feeder (circled numeral 4) and enabled to be mixed with the waste transported by a charging crane (circled numeral 3) into the shaking feeder (circled numeral 4), or the dioxin depressant from the storage part may be supplied to a drying lattice (circled numeral 5), i.e. one of the combustion parts, and further sprayed onto the waste existing in a dry state in the area of a combustion lattice (circled numeral 6) or into the waste in the process of combustion therein. The incineration of such industrial waste as building scraps like soft leather scraps or wall paper scraps or agricultural scraps like agricultural (hard or soft) vinyl scraps may be implemented by a translation lattice type incineration furnace as an industrial waste incineration furnace. To the site of this incineration, the dioxin depressant can be supplied in the same manner as in the case of the urban garbage incineration furnace. Then, the solid waste such as polluted soil containing such an organic chlorine compound as polychloride biphenyl (PCB) and the liquid waste such as waste oil or sludge (sewage sludge or paper plant sludge) containing such an organic chlorine compound as PCB may be treated

by the use of a rotary furnace, a multistage forge fire furnace, or a fluidized bed incineration furnace. The dioxin depressant is preferred to be used as added in advance to the waste. Preferably in this case, the dioxin depressant is used in a finely pulverized state.

Further, the method of using the dioxin depressant according to this invention prefers the solid waste such as polluted soil containing such an organic chlorine compound as polychloride biphenyl (PCB) to be incinerated in the presence of an alkali catalyst or a carbon type catalyst. Since the incineration performed in the presence of the alkali catalyst or the carbon type catalyst proceeds at a low temperature (300° - 350°C) as compared with the conventional incineration temperature (about 1000°C), the occurrence of dioxins can be repressed as aimed at and the soil can be deprived of the organic chlorine compound such as polychloride biphenyl (PCB) and consequently regenerated into harmless soil. Again in this case, the translation lattice type incineration furnace can be adopted as an industrial waste incineration furnace and can be supplied with the dioxin depressant in the same manner as in the case of the urban garbage incineration furnace. Preferably, the treatment may be carried out by the use of a rotary furnace, a multistage forge fire furnace, or a fluidized bed incineration furnace. The dioxin depressant is preferably used as added in advance to the waste under discussion. Preferably in this case, the dioxin depressant is used in a finely pulverized state. As concrete examples of the alkali catalyst which can be used in this invention, sodium hydroxide, potassium hydroxide, or lithium hydroxide may be cited. As the carbon type catalyst, active carbon can be used, for example. The catalyst can manifest the expected effect when it is used in an amount falling in the range of 3 - 10 wt. %, based on the weight of the organic chlorine compound in the solid waste.

When the liquid waste such as waste oil or sludge (sewage sludge or paper plant sludge) containing such an organic chlorine compound as PCB is treated by the use of a rotary furnace, a multistage forge fire furnace, or a fluidized bed incineration furnace. The method for using the dioxin depressant according to this invention can be adopted. Besides, this method can be adopted as described above when the heat treatment is performed on the waste by the use of such a low temperature heat-treating device as a reaction column. Preferably in this case, the liquid waste and the dioxin depressant are uniformly dispersed in each other by stirring in a liquid tank such as the reaction column. In this case, the dioxin depressant is preferred to be used in a finely pulverized state.

Now, this invention will be specifically described below with reference to working examples.

For the purpose of ensuring effective utility of the characteristic properties of the dioxin depressant according to this invention which is claimed to repress the occurrence of dioxins, samples of the dioxin depressant of this invention were tested for the relevant properties. The compositions of the samples of dioxin depressant used in the working examples were as shown in Table 3 below.

Table 3

| | Dolomite (wt. %) | Calcined dolomite A (wt. %) | Calcined dolomite B (wt. %) | Titanium (wt. %) | Zinc (wt. %) |
|---|---|---|---|---|---|
| Dioxin depressant A | 20 | 20 | 50 | 5 | 5 |
| Dioxin depressant B | 35 | 35 | 25 | 5 | |
| Dioxin depressant C | 15 | 15 | 65 | | 5 |

The dioxin depressants A, B, and C differing in composition as shown in Table 3 above were prepared by fully elaborately considering the amounts of dolomite and calcined dolomite in such amounts as to effect on the basis of the method of theoretical calculation mentioned above and mixing the components in the found amounts. The characteristic properties of these dioxin depressants A, B, and C were as shown in Table 4 below.

Table 4

| | Surface area ($m^2/g$) | pH | Emissivity (%) | Antibacterial ratio (%) | Deodorizing ratio (%) | Activity (%) | Crack-per-pass (%) | Relative dielectric constant (Ke) |
|---|---|---|---|---|---|---|---|---|
| Dioxin depressant A | 9.0 | 9.8 | 93.0 | 94.0 | 93.0 | 94.0 | 99.0 | 8.2 |
| Dioxin depressant B | 9.1 | 9.9 | 94.0 | 95.0 | 94.0 | 93.0 | 99.0 | 8.3 |
| Dioxin depressant C | 9.1 | 9.7 | 94.0 | 93.0 | 94.0 | 95.0 | 99.0 | 8.2 |

The dioxin depressants A, B, and C possessing the characteristic properties shown in Table 4 above were tested for ability to repress the occurrence of dioxins.

Example 1

A sample 1 was produced by mixing (1) 7.5 parts by weight of the dioxin depressant A having a particle size of 5 - 30 mm, a sample 2 by mixing (2) 7.5 parts by weight of the dioxin depressant B having a particle size of 5 - 30 mm, and a sample 3 by mixing (3) 7.5 parts by weight of the dioxin depressant C having a particle size of 5 - 30 mm respectively with 100 parts by weight of solid urban waste. Each of the samples was thrown into an urban waste incineration furnace and subjected to an incinerating treatment at 300° - 400°C. The waste gas emanating from the furnace was sampled at proper intervals after start of the combustion and the samples of waste gas were assayed to determine concentrations of dioxins (PCDDs and PCDFs) and chlorine components. The samples of waste gas from the samples 1 - 3 were not found to contain either dioxins or chlorine components.

Control 1

A solid urban waste was thrown into an urban waste incineration furnace and subjected to an incinerating treatment at 500° - 750°C. The waste gas emanating from the furnace was samples at proper intervals after start of the combustion and the samples of waste gas were assayed for concentrations of dioxins (PCDDs and PCDFs) and chlorine components. The total of five samples of waste gas thus collected were found to contain an average of 50 ng-TEQ/$m^3$ N of dioxins and an average of 80 ppm of chlorine components.

Example 2

A sample 1 was produced by mixing (1) 10 parts by weight of the dioxin depressant A having an average particle size of 50 µm, a sample 2 by mixing (2) 10 parts by weight of the dioxin depressant B having an average particle size of 50 µm, and a sample 3 by mixing (3) 10 parts by weight of the dioxin depressant C having an average particle size of 50 µm, respectively with 100 parts by weight of polluted soil containing polychloride biphenyl (PCB) (degree of pollution 5 g of PBC per 1 kg of soil). Each of the samples was thrown into an industrial waste incineration furnace and subjected to an incinerating treatment at 350° - 400°C. The waste gas emanating from the furnace was sampled at proper intervals after start of the combustion and the samples of waste gas were assayed for concentrations of dioxins (PCDDs and PCDFs) and chlorine components. The samples of waste gas from the samples 1 - 3 were not found to contain dioxins or chlorine components. The masses of soil remaining after the incineration of the samples 1 - 3 were assayed to determine concentrations of PCB. The PCB concentrations in the masses of soil remaining after the incineration of the samples were invariably less than 1%, the limit of detection. Thus, no discernible PCB was detected (ratio of removal exceeding 99%).

Control 2

Polluted soil containing polychloride biphenyl (PCB) (degree of pollution 5 g of PBC per kg) was thrown into an industrial waste incineration furnace and subjected to an incinerating treatment at 1000°C. The waste gas emanating from the furnace was sampled at proper intervals after start of the combustion and the samples of waste gas were assayed to determine concentrations of dioxin (PCDDs and PCDFs) and chlorine components. A total of three samples of waste gas were found to contain an average of 45 ng-TEQ/$m^3$ N of dioxins and an average of 75 ppm of chlorine components. The soil remaining after the incineration was assayed to determine PCB concentration. The PCB concentration in the incinerated soil was found to be less than 1%, the limit of detection. Thus, no discernible PCB was detected (ratio of removal exceeding 99%).

Example 3

A sample 1 was produced by mixing (1) 10 g of the dioxin depressant A having an average particle size of 30 µm, a sample 2 by mixing (2) 10 g of the dioxin depressant B having an average particle size of 30 µm, and a sample 3 by mixing (3) 10 g of the dioxin depressant C having an average particle size of 30 µm, respectively with 100 liters of waste oil containing polychloride biphenyl (PCB) (degree of pollution 500 ppm of PBC per 100 liters). Each of the samples was thrown into a reaction column and subjected to a heating treatment at 50° - 75°C. The waste gas emanating from the reaction column was samples at proper intervals after start of the heating and the samples of waste gas were assayed to determine concentrations of dioxins (PCDDs and PCDFs) and chlorine components. The samples of waste gas from the samples 1 - 3 were not found to contain dioxins or chlorine components. The masses of oil

resulting from the heat treatment of the samples 1 - 3 were assayed to determine concentrations of PCB. In the masses of oil from the samples, PCB concentrations exceeding 0.0002 ppm, the limit of detection, were not detected (concentrations of residual PCB 0 - 0.002 ppm).

Control 3

One liter of polluted oil containing polychloride biphenyl (PCB) (degree of pollution - 500 ppm of PBC per liter) was thrown into an industrial waste incineration furnace and subjected to an incinerating treatment at 600°C. The waste gas emanating from the furnace was sampled at proper intervals after start of the incineration and the samples of waste gas were assayed to determine concentrations of dioxins (PCDDs and PCDFs) and chlorine components. A total of two samples of waste gas were found to contain an average of 50 ng-TEQ/$m^3$ N of dioxins and an average of 78 ppm of chlorine components.

Example 4

A sample 1 was produced by mixing (1) 10 parts by weight of the dioxin depressant A having a particle size of 5 - 30 mm, a sample 2 by mixing (2) 10 parts by weight of the dioxin depressant B having a particle size of 5- 30 mm, and a sample 3 by mixing (3) 10 parts by weight of the dioxin depressant c having a particle size of 5 - 30 mm, respectively with 100 parts by weight of an industrial waste having a various composition shown in Table 5 below. Each of the samples was thrown into an industrial waste incineration furnace and subjected to an incinerating treatment at 350° - 430°C. The waste gas emanating from the furnace was sampled at proper intervals after start of the incineration and the samples of waste gas were assayed to determine concentrations of dioxins (PCDDs and PCDFs) and chlorine components. The samples of waste gas from the samples 1 - 3 were not found to contain dioxins or chlorine components.

Table 5

| Composition of industrial waste | | Compounding ratio (parts by weight) |
|---|---|---|
| Soft leather scrap | PVC | 100 |
| | Plasticizer | 10 |
| | Anti-oxidant | 3 |
| | Pigment | 15 |
| | Calcium carbonate | 20 - 50 |
| Wall paper scrap | PVC | 100 |
| | Plasticizer | 20 - 30 |
| | Pigment | 10 |
| | Stabilizer | 5 |
| | Calcium carbonate | 80 |
| Scrap of hard industrial vinyl chloride resin material | Hard PVC | 100 |
| | Others | 5 |
| Scrap of soft industrial vinyl chloride resin material | Soft PVC | 100 |
| | Plasticizer | 50 |
| | Others | 1 |
| * Others: Light-resisting and heat-resisting agent, etc. | | |

Control 4

A various industrial waste having a composition shown in Table 5 above was thrown into an industrial waste incineration furnace and subjected first to a heat treatment in the thermal decomposition part at 450°C and subsequently to an incinerating treatment in the combustion part at 1000°C. The waste gas emanating from the furnace was sampled at proper intervals after start of the heating and the samples of waste gas were assayed to determine concentrations

of dioxins (PCDDs and PCDFs) and chlorine components. A total of three samples of waste gas were found to contain an average of 45 ng-TEQ/$m^3$ N of dioxins and an average of 75 ppm of chlorine components.

The dioxin depressant set forth in claim 1 is only required to contain dolomite and/or calcined dolomite A which can be procured very cheaply and stably in large amounts from mines located inside and outside the territory of Japan as well as to manifest an excellent effect of repressing the occurrence of dioxins. It, therefore, enjoys prominent economy because it can be readily manufactured without requiring any special extra working. As noted clearly from the results of the examples cited above, this dioxin depressant obviates the necessity of using a conventional filter for removing chlorine components because it fully manifests an effect of repressing the occurrence of chlorine components besides repressing the occurrence of dioxins. It can be applicable to a device installed at a chemical plant, for example, for the purpose of purging the ambient air of chlorine. It can be used not exclusively in the repression of the occurrence of dioxins but further in a wide range of industrial fields. Moreover, the incinerating treatment using this dioxin depressant can manifest the effect thereof fully satisfactorily at a low temperature of combustion as compared with the conventional incinerating treatment not using the dioxin depressant of this invention. This incinerating treatment, therefore, is at an advantage in lowering the running cost and repressing the deterioration of the refractory material used in the furnace.

The dioxin depressant set forth in claim 2 not merely manifests the operation and effect peculiar to the invention of claim 1 described above but further manifests excellent antibacterial and deodorizing effects on the ash remaining after incineration because it additionally contain the calcined dolomite B. When it is used in the land-fill treatment, therefore, it can repress the exertion of such adverse effects as offensive odor on the immediate environment. This dioxin depressant can manifest the antibacterial and deodorizing effects even when it is used in a reclaimed form. The reclaimed dioxin depressant can be fired together with other recycled resin material for the purpose of manufacturing tiles which are used for paving roads such as, for example, a side walk.

The method set forth in claim 3 which is directed at using the dioxin depressant only requires the presence of the dioxin depressant set forth in claim 1 or claim 2 at the site of the disposal of a given waste by incineration or heating throughout the course of the treatment. By this extremely simple procedure, the occurrence of dioxins during the incineration of the waste can be repressed. This method, therefore, can be directly applied to nearly 2000 urban waste incineration furnaces without requiring any special modification. Epochally, the method brings about a perfect solution to the urgent problem of the pollution of the environment caused by the dioxins emitted from as much as 37,000,000 tons of urban waste annually incinerated within the territory of Japan (attended by the self-exposure induced by the pollution of the environment and the advance of the contamination of human bodies). Further, the method of use according to this invention not only can be extensively applied to the incinerating treatment performed on various kinds of waste including solid waste such as polluted soil containing such an organic chlorine compound as PCB, liquid waste such as waste oil, various kinds of sludge such as sewage sludge and paper plant sludge, and industrial waste such as timbers treated with pentachlorophenol (PCP) and lumber scraps but also can be applied fully satisfactorily to the incineration performed by using a small-scale incineration device installed in a medical facility for the purpose of disposing of the waste from the medical establishment. Even in the incineration which is performed at a low temperature of combustion without receiving due operational management, this method proves exceptionally effective because it can manifest the effect thereof thoroughly. Further, the method of use according to this invention is at a veritable advantage in being capable of performing a heat treatment at a low temperature without entailing any incineration and therefore capable of purging the waste of harmful polluting substances without requiring an undue elevation of temperature of the thermochemical reaction responsible for the synthesis of dioxins. The method of use according to the present invention, owing to the optional use of an alkali catalyst at the site of the treatment of incineration, further proves highly advantageous in respect that the heat treatment for purging the waste of harmful polluting substances can be performed effectively at a low temperature. The ash generated in a various incineration furnace is inhabited by a host of microorganisms (specifically, numbering an average of 7.5 - 8.0 $\times 10^6$ microbes/g). The dioxin depressant of this invention used in the method, however, is at an advantage in possessing an antibacterial power and, as a result, inhibiting the growth of these microorganisms.

## Claims

1. A dioxin depressant capable of repressing the occurrence of dioxins during the incineration or heat-treatment of waste, characterized by containing at least one member selected from the group consisting of calcined dolomite thereof and dolomite.

2. A dioxin depressant according to claim 1, wherein said dioxin depressant contains a calcined dolomite obtained by calcining dolomite at a temperature of 700° to 800°C.

3. A dioxin depressant according to claim 1, wherein said calcined dolomite is obtained by calcining a calcined dolomite having magnesium oxide and calcium oxide as main components at a temperature of 900° to 1,200°C.

4. A dioxin depressant according to claim 3, wherein said dioxin depressant is obtained by calcining dolomite at a temperature of 1,000° to 1,100°C.

5. A method for the use of a dioxin depressant, characterized by performing an incinerating or heating treatment on given waste in the presence of a dioxin depressant set forth in any one of claims 1 to 4.

6. A method according to claim 5, wherein an average diameter of said depressant is 5 to 30mm.